# EUROPEAN PATENT SPECIFICATION

(11) **EP 0 331 387 B1**
(45) Date of publication and mention of the grant of the patent: **12.05.1993**
(21) Application number: 89301907.5
(22) Date of filing: 27.02.1989
(51) Int. Cl.: A23L 1/217

(54) **Crisps**
Chips
Chips

(30) Priority: 27.02.1988 GB 8804670
(43) Date of publication of application: 06.09.1989
(73) Proprietor: UNITED BISCUITS (UK) LIMITED, West Drayton, Middlesex UB7 6PR (GB)
(72) Inventor: Evans, Garfield George, North Moreton Oxfordshire 0X11 9AX (GB); Selwyn-Smith, Jerome Selwyn, Wokingham Berkshire RG11 1HW (GB); Wilkes, Malcolm Stuart, Cookham Dean, Buckinghamshire SL6 9NZ (GB); Wrathall, Kevin Roydon, Burton-on-Irent, Staffordshire DE 13 9SJ (GB)
(74) Representative: Ackroyd, Robert

(56) References cited:
- AT-A- 356 492
- DE-C- 710 713
- GB-A- 2 172 185
- US-A- 4 277 510
- US-A- 4 511 586
- US-A- 4 743 455
- FOOD SCIENCE & TECHNOLOGY ABSTRACTS, no. 88-07-J0072 (88035716); S.L.L. PLIMPTON: "Factors affecting the oil content of potato chips and the application of near infra-red reflectance to on-line moisture and oil content measurements"

## Description

This invention relates to methods for the manufacture of potato crisps and is especially concerned with such methods which give soft textures in thick potato crisps.

In the manufacture of potato crisps by conventional methods, selected varieties of potato, e.g. "Record", are sliced to a thickness of about 1.5 mm and fried. However, there is a substantial demand for crisp-like potato snack products which are different from conventional potato crisps and such products include ones having a high level of perceived quality. One way in which this demand has been met is the production of thicker potato crisps. Thickness in this context means the overall width of the potato slices and one way of producing thicker potato crisps is to use crinkle-cut slices which typically have an overall width of about 4.5 millimetres, i.e. from the peaks of the zigzag or crinkle shape on one side to the peaks on the other side. It is known that crinkle-cut crisps can be fried out, i.e. cooked through, and that these products have a satisfactory and crisp eating quality. Crinkle-cut crisps are described in US-A-4511586. However, if such crinkle-cut slices of typical "Record" or other crisping potato varieties are fried using conventional methods, hard textured products which are unattractive and difficult to eat are produced.

It is a well-known practice in potato crisp manufacture to lower the amount of reducing sugars before the frying step, by soaking the potato slices in hot water. Reducing sugars can cause the products to have an undesirable brown colour and this hot-washing step alleviates this disadvantage. A hot-washing process is described in US-A-4743455, although the process was in general known and used long before the date of that document. A hot-washing process which can also involve microwave heating is described in AT-A-356492.

DE-C-710713 describes a process in which potato slices of 5 to 10 mm thickness are blanched in boiling water, air-dried to a moisture content of 10 to 16% and then cooked in heated oil.

It has now been found that hot-washing has an unexpected effect when carried out with thick potato slices, because the resultant products are satisfactory in all respects and, unlike the unattractive and difficult-to-eat products obtained from thicker potato slices without hot-washing, have a desirable crisp but soft-textured bite and mouthfeel. While hot-washing undoubtedly has the same action in lowering reducing sugar content when carried out on thick slices as on conventional thin (i.e. 1.5 mm) slices, it apparently also has a beneficial and surprising effect on how the hot-washed slices behave in the subsequent frying step. Furthermore, it has been established that other treatment steps can be carried out additionally or alternatively on the thick potato slices, before the frying step, which have much the same beneficial effect as hot-washing per se. These alternative or additional treatment steps include steaming and microwaving. For instance, satisfactory thick potato crisps can be made by a process in which the conventional frying step, e.g. using oil at 180°C with a frying time of 6 minutes, is preceded either by steaming for about 2 minutes or by exposing the slices to microwave energy in a humid environment for a period of time selected to give a comparable effect.

According to this invention, a method of manufacture of potato crisps is characterised in that
(a) potato slices having an overall width in the range from 4 to 5 mm are hot-washed at least once at a temperature in the range from 70° to 95°C and for a time of up to 8 minutes, the temperature, time and other conditions of the hot-washing step being selected so as to provide the slices so treated with acceptable degrees of hardness and crispness, and
(b) the hot-washed slices are fried by immersion in oil under such conditions of temperature and time that the resultant potato crisps have a final moisture content of not more than 2.0% by weight.

In carrying out the invention, it is preferable for the slices to be hot-washed for 3 to 8 minutes or for 0.5 to 4 minutes followed by exposure to microwave energy in a humid environment, i.e. as naturally arises after the hot-washing, for 0.5 to 8 minutes, the temperature, times and other conditions of this stage or stages being selected so as to produce the desired acceptable hardness and crispness characteristics.

In carrying out a preferred embodiment of the process of the invention, potato slices, preferably crinkle-cut, having an overall width of about 4.5 mm are first hot-washed by being soaked in water at about 80°C for about 6 minutes and are then fried by being immersed in oil at 150° to 190°C for 3 to 8 minutes and most preferably at about 180°C for about 6 minutes, so as to achieve a final moisture content of less than 2% by weight.

Another preferred feature of the invention which has been found effective in the manufacture of thick potato crisps, using a hot-washing, steaming and/or moist microwaving pre-frying step, is to carry out the frying step per se on a differential basis, i.e. by causing the pre-treated slices to proceed through 2 or more zones at different frying oil temperatures. Furthermore, while crinkle-cut slices are preferred, the thicker slices used in carrying out the invention can have an overall width within the range of, say, 3 to 6 mm and another preferred and surprisingly effective feature is to produce the slices in a crinkle-cut or other zig-zag form with a degree of offset between the 2 main surfaces. This means that, if the cross-sectional shape of the slices is defined by upper and lower sawtooth, wavy or other shapes, which are nominally the same as one another, the upper surface is displaced laterally relative to the lower, so that the cross-sectional width of the slices is greater in, for instance, the right-hand sides of each crinkle or wave than in the left-hand sides, although the overall width is unaltered. An offset of about 1 mm (40 thou) is effective with crinkle-cut slices about 4 to 5 mm in overall width.

In one preferred form of the invention, hot-washing at 78° to 92°C for 1 to 5 minutes, more preferably at 80° to 90°C for 1 to 3 minutes, is followed by microwave heat-treatment for 1 to 6 minutes, optionally followed by at least one further hot-washing, e.g. for 1 to 2 minutes.

Where a steaming step is incorporated in the method, this is desirably carried out for 1 to 3 minutes. The most preferred hot-washing conditions where microwaving is not used are represented by 75° to 95°C for 4 to 7 minutes and, most preferably, 78° to 82°C for 5.5 to 6.5 minutes.

Preferably, the potato slices used in the process of the present invention have a specific gravity of from 1080 to 1090.

In order to establish and explain in more detail the preferred sets of conditions and other variables which give highly satisfactory products and so make full use of the unexpected discoveries upon which this invention is based, a number of examples and tests are described below.

Assessment of texture in the following trials was carried out using a panel of about 10 selected and trained testers. The terms "hardness" and "crispness" used in the exercise were defined and standardised. The tasters were asked to eat a sample of each product and indicate their score, as a value between 0 and 100 mm, upon a line 100 mm long. When tasters become experienced, highly consistent results are obtained, even though such tests are very subjective in nature. These scores were analysed using a "Statgraphics" software packing for two-way analysis of variance programme giving mean scores, significance of effect and least significant differences (p = 0.05) between pairs and samples. Dimensions of the crisps are given in millimetres and also in thousands of an inch ("thou"). Specific gravities are measured by the standard brine technique, using pure water as the basis, with 1000 sg.

### EXAMPLE 1

### STEAMING

"Record" potatoes were brine-graded to separate out and use the 1082-1092 sg fraction. These potatoes were peeled and then sliced into crinkle crisps of 180-185 thou thickness (4.5 to 4.625 mm) and with 40 thou offset (1.0 mm). The slices were washed in deionised water at ambient temperature for 3 minutes, to remove surface starch, and were then steamed at 105°C for one minute or for three minutes. Frying was carried out at 165°C for 6 1/2 minutes on one batch and at 180°C for 4 1/2 minutes on another batch. Taste panel assessment results on all these products indicated that the crisps of the invention had a harder and crisper texture than the standard factory product.

| Steam Time (min) | Frying | Hardness | Crispness |
|---|---|---|---|
| 3 | 180°C/4 1/2 min | 74.5 | 76.1 |
| 3 | 160°C/6 1/2 min | 76.4 | 79.6 |
| 1 | 180°C/4 1/2 min | 68.4 | 75.3 |
| 1 | 160°C/6 1/2 min | 75.1 | 73.5 |
| Factory product | | 64.8 | 65.8 |

### EXAMPLE 2

### MICROWAVE ENERGY

"Record" potatoes were brine-graded, peeled, sliced and washed as in Example 1 and were then subjected to various hot-washing and microwave regimes. Hot-washing was carried out in deionised water at 80°C or 90°C and a domestic microwave oven was used to heat-treat the slices. Parts 1, 2 and 3 included a further hot-washing, while Part 4 included 2 further hot-washing with a second microwave stage between them.

| | Hot-Washing | Microwave | Hotwash | Microwave | Hotwash |
|---|---|---|---|---|---|
| 1 | 1m @ 80°C | 4m @ P9 | 1m | - | - |
| 2 | 1m @ 80°C | 5m @ P4 | 1m | - | - |
| 3 | 1m @ 80°C | 2m @ P9 | 2m | - | - |
| 4 | 1m @ 80°C | 1m @ P9 | 1m | 1m @ P9 | 1m |
| 5 | 2m @ 80°C | 2m @ P9 | - | - | - |
| 6 | 2m @ 80°C | 5m @ P5 | - | - | - |
| 7 | 3m @ 80°C | 2m @ P9 | - | - | - |
| 8 | 2m @ 90°C | 2m @ P9 | - | - | - |
| 9 | 3m @ 90°C | 3m @ P9 | - | - | - |

The slices were then fried at 180°C for 4 1/2 minutes, to reduce the moisture content to less than 2%. An informal taste panel decided that these crisps were harder and more crisp than the conventional product, and were all satisfactory. P indicates the power setting used.

### EXAMPLE 3

### HOT-WASH REGIMES

"Record" potatoes were treated as in Example 1 and were then subjected to various hot-wash regimes, using deionised water, at the following temperatures and times:
80°C/6m : 85°C/6m : 90°C/6m : 95°C/6m : 100°C/2 1/2m

The slices were then fried at 180°C for 4 1/2 minutes to reduce the moisture content to below 2%.

Results of a taste panel test on these products indicated similar hardness and crispness for the 80°C, 85°C and 90°C samples, but at higher temperatures there was a reduction in both hardness and crispness.

| | 80°C/6m | 85°C/6m | 90°C6m | 95°C/6m | 100°C/2 1/2 |
|---|---|---|---|---|---|
| Hardness | 67 | 66 | 66 | 59 | 51 |
| Crispness | 70 | 69 | 73 | 68 | 63 |

The final hot-wash regime used a high temperature for a short time and is excluded from the invention, the product not being acceptable as regards it hardness and crispness characteristics.

### EXAMPLE 4

### LENGTH OF THE HOT-WASH

"Record" potatoes were treated as in Example 1 and then subjected to three different hotwash regimes, using deionised water at 80°C for 6 minutes, 4 minutes and 2 minutes.

Final frying was carried out at 160°C for 6 1/2 minutes to reduce the moisture content to less than 2%.

Taste panel results show that the product becomes less crisp as the hotwash time increases and the trend is for the product to become less hard with increased hot-wash.

| | 80°C/6m | 80°C/4m | 80°C/2m |
|---|---|---|---|
| Hardness | 56 | 59 | 62 |
| Crispness | 61 | 65 | 69 |

It will be noted that the first of these products was made using the same hot-wash regime as in the first part of Example 3. The different perception of mouthfeel and other results produced by the test panel, in Example 4 part 1. can be explained by the effect of the lower temperature and longer time used in the frying step.

### EXAMPLE 5

### EFFECT OF HOT-WASHING

Three varieties of potato were brine-graded and the >1092g fraction of each was separated. The potatoes were peeled and sliced into crinkle crisps of 4.5-4.625 mm (180-185 thou) thickness and 1.0 mm (40 thou) offset. The slices were washed in deionised water at ambient temperature for 3 minutes to remove surface starch.

Half of the slices from each variety were given no hot-wash and the other half were hot-washed in deionised water at 80°C for six minutes.

All slices were fried at 160°C for 6 1/2 minutes to reduce moisture content to less than 2%.

Panel results indicate reduced crispness and hardness with full hot-wash. NH = no hot-wash; H = hot-wash.

| Potato Variety | Saturna | | Record | | Erntestolz | |
|---|---|---|---|---|---|---|
| | NH | H | NH | H | NH | H |
| Hardness | 76 | 63 | 81 | 72 | 67 | 58 |
| Crispness | 80 | 67 | 82 | 76 | 70 | 64 |

In each test, the use of a hot-wash according to the invention led to a softer product.

### EXAMPLE 6

### OFFSET

### Part A

"Record" potatoes were brine-graded to separate the >1092g fraction. These potatoes were peeled and sliced into crinkle crisps in two ways, each batch having 4.5-4.625 mm (180-185 thou) thickness and one batch having no offset and the other having a 1.0 mm (40 thou) offset. The slices were washed in deionised water at ambient temperature for 3 minutes followed by hot-washing in deionised water at 80°C for 6 minutes.

Frying was carried out at 160°C for 6 1/2 minutes to reduce the moisture content to below 2%.

Panel results showed a trend towards a less hard and less crisp product with increased offset.

| | 1.0 mm (40 Thou) Offset | 0 mm (Thou) Offset |
|---|---|---|
| Hardness | 62 | 65 |
| Crispness | 67 | 72 |

### Part B

A further trial involved processing "Record" potatoes as outlined above. The crisp slices were made with 0, 1.0, 1.5, 2.0 mm (0, 40, 60 and 80 thou) offset.

The slices were washed in deionised water at ambient temperature for 3 minutes to remove surface starch and then hot-washed in deionised water at 80°C for 6 minutes. The slices were then fried at 180°C for 4 1/2 minutes to reduce moisture content to below 2%. The 2.0 mm (80 thou) sample required a 5 minute fry. Taste panel results indicated that increasing offset resulted in a tendency for the texture to become less hard and crisp.

| | Offset | | | |
|---|---|---|---|---|
| | 0 mm (0 Thou) | 1.0 mm (40 Thou) | 1.5 mm (60 Thou) | 2.0 mm (80 Thou) |
| Hardness | 73 | 70 | 65 | 65 |
| Crispness | 75 | 74 | 68 | 71 |

The optimum offset for a soft eating product is about 1.5 mm (60 thou) on the basis of this test Example.

### EXAMPLE 7

### GRAVITY

"Record" potatoes were brine-graded into three specific gravity groups, <1080, 1080-1090, >1090; potatoes from each group were peeled and sliced into crinkle crisps of 4.5-4.625 mm (180-185 thou) thickness and 1.0 mm (40 thou) offset. The slices were washed in deionised water at ambient temperature to remove surface starch and then hot-washed in deionised water at 80°C for 6 minutes. The slices were then fried at 180°C for 4 1/2 minutes to reduce moisture content to less than 2%.

Taste panel results show that a reduction in product hardness and crispness can be achieved by using lower gravity potatoes. The sg range of 1080 to 1090 is thus preferred.

| | <1080 | 1080-1090 | >1090 |
|---|---|---|---|
| Hardness | 57 | 65 | 72 |
| Crispness | 69 | 75 | 78 |

### EXAMPLE 8

### VARIETY

Four varieties of potato were brine-graded and the >1090g fraction was separated. These potatoes were peeled and then sliced into crinkle crisps of 4.5-4.625 mm (180-185 thou) thickness and 1.0 mm (40 thou) offset.

Slices were washed in deionised water at ambient temperature for 3 minutes and then hot-washed in deionised water at 80°C for 6 minutes.

Slices were then fried at 160°C for 6 1/2 minutes to reduce the moisture content to less than 2%.

Taste panel results indicate that by choosing different varieties of potato, product hardness and crispness can be reduced.

| | Promesse | Erntestolz | Record | Saturna |
|---|---|---|---|---|
| Hardness | 68 | 60 | 67 | 61 |
| Crispness | 69 | 63 | 70 | 60 |

All of these test results indicate that the products are highly satisfactory, thus indicating that the process of the invention can be carried out with many different varieties of potato.

## Claims

1. A method of manufacture of potato crisps, in which potatoes are sliced, subject to hot-washing and fried, characterised in that
(a) potato slices having an overall width in the range from 4 to 5 mm are hot-washed at least once at a temperature in the range from 70° to 95°C and for a time of up to 8 minutes, the temperature, time and other conditions of the hot-washing step being selected so as to provide the slices so treated with acceptable degrees of hardness and crispness, and
(b) the hot-washed slices are fried by immersion in oil under such conditions of temperature and time that the resultant potato crisps have a final moisture content of not more than 2.0% by weight.

2. A method according to claim 1 in which the potato slices are hot-washed for a time in the range from 3 to 8 minutes.

3. A method according to claim 1 or 2, in which the hot-washed slices are fried at a temperature in the range from 150° to 190°C for a time in the range from 3 to 8 minutes.

4. A method according to claim 1, in which the potato slices are hot-washed for a time in the range from 0.5 to 4 minutes and, prior to frying, are heat-treated by exposure to microwave energy in a humid environment for a time in the range from 0.5 to 8 minutes, the temperatures, times and heat-treatment conditions of these stages being selected so as to provide the slices with acceptable hardness and crispness characteristics.

5. A method according to claim 4, in which hot-washing at 78° to 92°C for 1 to 5 minutes is followed by microwave heat-treatment for 1 to 6 minutes and, if required, the heat-treated potato slices are again hot-washed.

6. A method according to claim 5, in which at least one further hot-washing is carried out for a time in the range from 1 to 2 minutes.

7. A method according to claim 4, 5 or 6, in which the hot-washing is carried out at 80°C to 90°C for 1 to 3 minutes.

8. A method according to claim 1, 2 or 3, in which the frying step (b) is preceded by steaming the hot-washed slices for 1 to 3 minutes.

9. A method according to any of claims 1, 2, 3 and 8, in which the hot-washing is carried out at 75°C to 95°C for 4 to 7 minutes.

10. A method according to claim 9, in which the hot-washing is carried out at 78° to 82°C for 5.5 to 6.5 minutes.

11. A method according to any of claims 1 to 3 and 7 to 9, in which potato slices having an overall width of about 4.5 mm are hot-washed at about 80°C for about 6 minutes.

12. A method according to claim 11, in which the hot-washed slices are fried by immersion in oil at about 180°C for about 6 minutes.

13. A method according to any preceding claim, in which the potato slices are crinkle-cut.

14. A method according to claim 13, in which the potato slices are crinkle-cut with an offset.

15. A method according to claim 14, in which the slices have an offset of about 1 mm (40 thou).

16. A method according to any preceding claim, in which the frying step (b) is carried out on a differential basis, by causing the slices to proceed through two or more zones at different frying oil temperatures.

17. A method according to any preceding claim, in which the potato slices have a specific gravity in the range from 1080 to 1090.

## Patentansprüche

1. Verfahren zur Herstellung von Kartoffelchips, wobei Kartoffeln in Scheiben geschnitten, heiß gewaschen und geröstet werden, dadurch gekennzeichnet, daß
(a) Kartoffelscheiben mit einer Gesamtdicke im Bereich von 4 bis 5 mm bei einer Temperatur im Bereich von 70°C bis 95°C für eine Dauer von bis zu 8 Minuten mindestens einmal heiß gewaschen werden, wobei die Temperatur, Zeit und andere Bedingungen des heißen Waschschrittes so gewählt werden, daß die so behandelten Scheiben mit einem angenehmen Grad an Festigkeit und Knusprigkeit versehen werden, und
(b) die heiß gewaschenen Scheiben durch Eintauchen in Öl unter solchen Temperatur- und Zeitbedingungen geröstet werden, daß die so erhaltenen Kartoffelchips einen Endfeuchtigkeitsgehalt von nicht mehr als 2 Gew.-% haben.

2. Verfahren nach Anspruch 1, wobei die Kartoffelscheiben für eine Dauer im Bereich von 3 bis 8 Minuten heiß gewaschen werden.

3. Verfahren nach Anspruch 1 oder 2, wobei die heiß gewaschenen Scheiben bei einer Temperatur im Bereich von 150°C bis 190°C für eine Dauer im Bereich von 3 bis 8 Minuten geröstet werden.

4. Verfahren nach Anspruch 1, wobei die Kartoffelscheiben für eine Dauer im Bereich von 0,5 bis 4 Minuten heiß gewaschen werden und vor dem Rösten hitzebehandelt werden, indem sie Mikrowellenenergie in einer feuchten Umgebung für eine Dauer im Bereich von 0,5 bis 8 Minuten ausgesetzt werden, wobei die Temperaturen, Zeiten und Bedingungen für die Hitzebehandlung dieser Verfahrensschritte so gewählt werden, daß die Scheiben mit angenehmen Festigkeits- und Knusprigkeits-Eigenschaften versehen werden.

5. Verfahren nach Anspruch 4, wobei auf das 1 bis 5 minütige Heißwaschen bei 78°C bis 92°C eine 1 bis 6 minütige Mikrowellen-Hitzebehandlung folgt, und die hitzebehandelten Kartoffelscheiben, falls erforderlich, nochmals heiß gewaschen werden.

6. Verfahren nach Anspruch 5, wobei mindestens ein weiterer Heißwasch-Vorgang für eine Dauer im Bereich von 1 bis 2 Minuten durchgeführt wird.

7. Verfahren nach Anspruch 4, 5 oder 6, wobei das Heißwaschen 1 bis 3 Minuten bei 80°C bis 90°C durchgeführt wird.

8. Verfahren nach Anspruch 1, 2 oder 3, wobei dem Röstschritt (b) das 1 bis 3 minütige Bedampfen der heiß gewaschenen Scheiben vorausgeht.

9. Verfahren nach einem der Ansprüche 1, 2, 3 und 8, wobei das Heißwaschen 4 bis 7 Minuten bei 75°C bis 95°C durchgeführt wird.

10. Verfahren nach Anspruch 9, wobei das Heißwaschen 5,5 bis 6,5 Minuten bei 78°C bis 82°C durchgeführt wird.

11. Verfahren nach einem der Ansprüche 1 bis 3 und 7 bis 9, wobei Kartoffelscheiben mit einer Gesamtdicke von etwa 4,5 mm etwa 6 Minuten bei etwa 80°C heiß gewaschen werden.

12. Verfahren nach Anspruch 11, wobei die heiß gewaschenen Scheiben etwa 6 Minuten bei 180°C durch Eintauchen in Öl geröstet werden.

13. Verfahren nach einem der vorangehenden Ansprüche, wobei die Kartoffelscheiben wellenförmig geschnitten sind.

14. Verfahren nach Anspruch 13, wobei die Kartoffelscheiben mit einem Versatz wellenförmig geschnitten sind.

15. Verfahren nach Anspruch 14, wobei die Scheiben einen Versatz von etwa 1 mm (40 tausendstel inch) aufweisen.

16. Verfahren nach einem der vorangehenden Ansprüche, wobei der Röstschritt (b) auf einer gestaffelten Grundlage durchgeführt wird, indem die Scheiben durch eine oder mehrere Zonen mit verschiedenen Röstöltemperaturen geführt werden.

17. Verfahren nach einem der vorangehenden Ansprüche, wobei die Kartoffelscheiben ein spezifisches Gewicht im Bereich von 1080 bis 1090 aufweisen.

## Revendications

1. Procédé pour préparer des chips, selon lequel on découpe des pommes de terre en tranches, on les soumet à un lavage à chaud et on les fait frire, caractérisé en ce que
(a) on lave à chaud des tranches de pommes de terre possédant une largeur globale se situant dans la gamme de 4 à 5 mm, au moins une fois à une température située dans la gamme allant de 70° à 95°C et pendant une durée atteignant jusqu'à 8 minutes, la température, la durée et d'autres conditions de l'étape de lavage à chaud étant choisies de manière à conférer aux tranches ainsi traitées des degrés admissibles de dureté et de qualité croustillante,
(b) on fait frire les tranches lavées à chaud en les immergeant dans de l'huile dans des conditions de température et de durée telles que les chips résultantes possèdent une teneur finale en humidité non supérieure à 2,0 % en poids.

2. Procédé selon la revendication 1, selon lequel on lave à chaud les tranches de pommes de terre pendant une durée se situant dans la gamme allant de 3 à 8 minutes.

3. Procédé selon la revendication 1 ou 2, selon lequel on fait frire les tranches lavées à chaud, à une température se situant dans la gamme allant de 150° à 190°C pendant une durée se situant dans la gamme allant de 3 à 8 minutes.

4. Procédé selon la revendication 1, selon lequel on lave à chaud les tranches de pommes de terre pendant une durée se situant dans la gamme allant de 0,5 à 4 minutes et, avant de les faire frire, on les soumet à un traitement thermique par exposition à une énergie à micro-ondes dans un environnement humide pendant une durée se situant dans la gamme allant de 0,5 à 8 minutes, les températures, les durées et les conditions de traitement thermique de ces étapes opératoires étant choisies de manière à conférer aux tranches une caractéristique acceptable de dureté et une caractéristique croustillante acceptable.

5. Procédé selon la revendication 4, selon lequel le lavage à chaud entre 78° et 92°C pendant 1 à 5 minutes est suivi par un traitement thermique à micro-ondes pendant 1 à 6 minutes et, si cela est nécessaire, on applique à nouveau un lavage à chaud aux tranches de pommes de terre ayant subi le traitement thermique.

6. Procédé selon la revendication 5, selon lequel on exécute au moins un lavage à chaud supplémentaire pendant une durée se situant dans la gamme allant de 1 à 2 minutes.

7. Procédé selon la revendication 4, 5 ou 6, selon lequel on exécute le lavage à chaud entre 80°C et 90°C pendant 1 à 3 minutes.

8. Procédé selon la revendication 1, 2 ou 3, selon lequel l'étape de friture (b) est précédée par l'application de vapeur aux tranches lavées à chaud, pendant 1 à 3 minutes.

9. Procédé selon l'une quelconque des revendications 1, 2, 3 et 8, selon lequel on exécute le lavage à chaud entre 75°C et 95°C pendant 4 à 7 minutes.

10. Procédé selon la revendication 9, selon lequel on exécute le lavage à chaud entre 78° et 82°C pendant 5,5 à 6,5 minutes.

11. Procédé selon l'une quelconque des revendications 1 à 3 et 7 à 9, selon lequel on applique un lavage à chaud aux tranches de pommes de terre possédant une largeur globale égale à environ 4,5 mm, à environ 80°C pendant environ 6 minutes.

12. Procédé selon la revendication 11, selon lequel on fait frire les tranches lavées à chaud, en les immergeant dans l'huile à environ 180°C pendant environ 6 minutes.

13. Procédé selon l'une quelconque des revendications précédentes, selon lequel on découpe avec une forme ondulée les tranches de pommes de terre.

14. Procédé selon la revendication 13, selon lequel on découpe avec une forme ondulée les tranches de pommes de terre, et ce avec un décalage.

15. Procédé selon la revendication 14, selon lequel les tranches présentent un décalage d'environ 1 mm (40 millièmes de pouce).

16. Procédé selon l'une quelconque des revendications précédentes, selon lequel on exécute l'étape de friture (b) sur une base différentielle, en réalisant un traitement des tranches dans deux ou plusieurs zones avec des températures différentes de l'huile de friture.

17. Procédé selon l'une quelconque des revendications précédentes, selon lequel les tranches de pommes de terre possèdent un poids spécifique dans la gamme comprise entre 1080 et 1090.
